# EUROPÄISCHE PATENTSCHRIFT

(11) **EP 2 397 913 B1**
(45) Veröffentlichungstag und Bekanntmachung des Hinweises auf die Patenterteilung: **16.01.2019**
(21) Anmeldenummer: 11169036.8
(22) Anmeldetag: 08.06.2011
(51) Int. Cl.: G03G 15/00

(54) **Wartungsverfolgungssystem**
Maintenance follow-up system
Système de suivi de maintenance

(30) Priorität: 18.06.2010 DE 102010024275
(43) Veröffentlichungstag der Anmeldung: 21.12.2011
(73) Patentinhaber: Heidelberger Druckmaschinen AG, 69115 Heidelberg (DE)
(72) Erfinder: Herzberger, Eckhard, 69190 Walldorf (DE); Kranczoch, Peter, 67271 Obersulzen (DE); Lemke, Marika, 68753 Waghäusel (DE)

(56) Entgegenhaltungen:
- WO-A1-02/077718
- US-A1- 2002 147 732
- US-A1- 2006 200 550
- US-B1- 6 587 647

## Beschreibung

Die vorliegende Erfindung betrifft ein Verfahren zur Wartung von Maschinen in der grafischen Industrie unter Einsatz wenigstens eines Fernwartungsrechners, wobei dem Rechner über einen ersten Informationskanal eine Wartungsanfrage für eine Maschine zugeleitet und in ein Wartungsticket übernommen wird und wobei dem Rechner über einen zweiten Informationskanal Betriebsdaten der Maschine zugeleitet werden.

Inzwischen werden viele Maschinen der grafischen Industrie wie Druckmaschinen, Druckplattenbelichter und Maschinen zur Druckweiterverarbeitung mittels Fernwartungsrechnern gewartet. Es kann so auf häufige Einsätze des Servicepersonals bei Problemen an der Maschine verzichtet werden. Diese Fernwartungssysteme können nach unterschiedlichen Verfahren arbeiten, so kann z. B. der Besitzer einer Druckmaschine per Telefon oder Knopfdruck einen Wartungsauftrag beim Hersteller in Auftrag geben, wobei er am Telefon seine Maschinennummer und aufgetretene Probleme benennt. Der Hersteller der Maschine kann dann vom Fernwartungsrechner z. B. über eine Internetverbindung auf den Rechner der Druckmaschine zugreifen und versuchen, das Problem zu beheben oder zunächst weitere Daten zur Analyse von dem Rechner der Druckmaschine zum Fernwartungsrechner übertragen. Ein derartiges Verfahren geht aus der Offenlegungsschrift EP 1 855 162 A2 hervor. Um den Wartungsvorgang dokumentierend begleiten zu können, ist es üblich, ein so genanntes Wartungsticket im Fernwartungsrechner zu generieren, welches die beim Wartungsvorgang anfallende Daten eindeutig der zu wartenden Maschine und dem damit verbundenen Serviceauftrag zuordnet.

Beim dem eingangs erwähnten Verfahren wird jedoch der Auftrag zur Wartung über einen anderen Informationskanal eingegeben als die Abfrage weiterer Betriebsdaten von der Druckmaschine. So erfolgt die Serviceanfrage per Telefon, während die Betriebsdaten der Druckmaschine vom Fernwartungsrechner aus über das Internet abgerufen werden.

Das Dokument US 2006/0200550 A1 beschreibt ein Verfahren und ein System zur Bereitstellung von technischer Unterstützung bei Netzwerkgeräten. Dabei ist vorgesehen, dass das Netzwerkgerät eine Software zum Aufbau eines Konferenzkanals aufweist. Des Weiteren ist ein Server vorhanden, welcher dazu vorgesehen ist, Video- und Audiodaten zu verteilen. An den Server ist noch ein zweites Gerät angeschlossen. Auf diese Art und Weise können die beiden Geräte und der Server Audio- und Videodaten miteinander austauschen. Des Weiteren ist ein Rückkanal vorgesehen, welcher dazu verwendet wird, Diagnose- und Statusinformationen an das erste Gerät zu übertragen. Ein eingehender Serviceanruf von einem Gerät wird dabei von einer Person im Servicecenter verwaltet, welche den Kontakt zwischen einem Servicetechniker und dem ersten Gerät herstellt.

Das Patent US 6,587,647 B1 zeigt ein Verfahren und System zur Wartung von Druckern oder Kopierern. Dabei ist vorgesehen, dass ein Kopierer, der zu warten ist, Emails an ein Helpdesk-System und ein Dispatcher-System verschickt.

Das Dokument WO 02/077718 A1 zeigt ein Verfahren und System zum Servicemanagement und zur Serviceunterstützung und Generierung von Serviceberichten. Das Verfahren beinhaltet die Übermittlung von Störungen eines Kopierers über einen ersten Kanal an ein Dispatcher-Computersystem. Dieses Dispatcher-Computersystem kann automatisiert Anfrage- und Auftragsdaten des Kopierers bei einem Kunden, welche ihm über den ersten Kanal zugeleitet werden, erhalten. Das Dispatcher-Computersystem hält in einer zugeordneten Datenbank Stammdaten zu dem jeweiligen betroffenen Kopierer bereit. Die Stammdaten können dabei vorteilhaft weitere Daten enthalten, wie zum Beispiel eine Service- und Wartungshistorie. Der Dispatcher-Computer kann Serviceauftragsdaten, welche die Störung identifizierende Daten enthalten, über einen zweiten Kanal, vorzugsweise drahtlos, zu einem mobilen Computer bei einem Techniker vor Ort an einem Kopierer übertragen. Die Datenübertragung kann dabei entweder durch den Dispatcher-Computer oder den mobilen Computer des Servicetechnikers initiiert werden. Weiterhin kann der Servicetechniker seinen mobilen Computer über eine entsprechende Datenschnittstelle an den Kopierer anschließen. Der Techniker kann dann auf seinen mobilen Computer maschineninterne Daten übertragen, welche er bei der Reparatur und Wartung des Kopierers nutzen kann. Wenn die Reparatur abgeschlossen ist, generiert der Techniker mittels des mobilen Computers einen Servicebericht, in den automatisch per computerinterner Datenübernahme Daten aus dem Serviceauftragsdatensatz des Dispatcher-Computers eingefügt werden. Der so erstellte Servicebericht kann dann per elektronischer Kommunikation über den zweiten Datenkanal vom mobilen Computer des Servicetechnikers zum Dispatcher-Computer in der zentralen Serviceschnittstelle übermittelt werden. Bei dem zentralen Dispatcher-Computer kann es sich bevorzugt um ein Warenwirtschaftssystem handeln.

Die Anmeldung US 2002/0147732 A1 zeigt ein Verfahren und eine Vorrichtung sowie ein Programm zur Verwaltung von Kunden- und Produktinformationen in einer Datenbank. Dabei werden Kunden, Callcenter, Servicebetriebe und das Lager miteinander verbunden, um effizientes Kunden- und Produktmanagement betreiben zu können. Ein Bediener kann durch Zugriff auf die Datenbank dort Veränderungen vornehmen und den Kunden- und Produktmanagementprozess in Echtzeit verändern. Auf diese Art und Weise kann die Kommunikation und die Liefergeschwindigkeit verbessert werden. In der Datenbank werden Produkte, Kundenkontakte und Kaufinformationen über den Kunden verwaltet. Das System enthält ein Modul zur Verwaltung von E-Mails, welches eingehende E-Mails kategorisiert und beantwortet. Die so kategorisierten E-Mails werden dabei dem jeweiligen geeigneten Kundenansprechpartner zugeordnet, so dass Garantiefälle dem für Garantiefälle verantwortlichen Servicepersonal zugeordnet werden.

Es ist Aufgabe der vorliegenden Erfindung, ein Verfahren zur Wartung von Maschinen der grafischen Industrie unter Einsatz wenigstens eines Fernwartungsrechners zu schaffen, bei dem sichergestellt wird, dass auf unterschiedlichen Informationskanälen bezogene Daten für einen Wartungsvorgang miteinander in Bezug gesetzt werden.

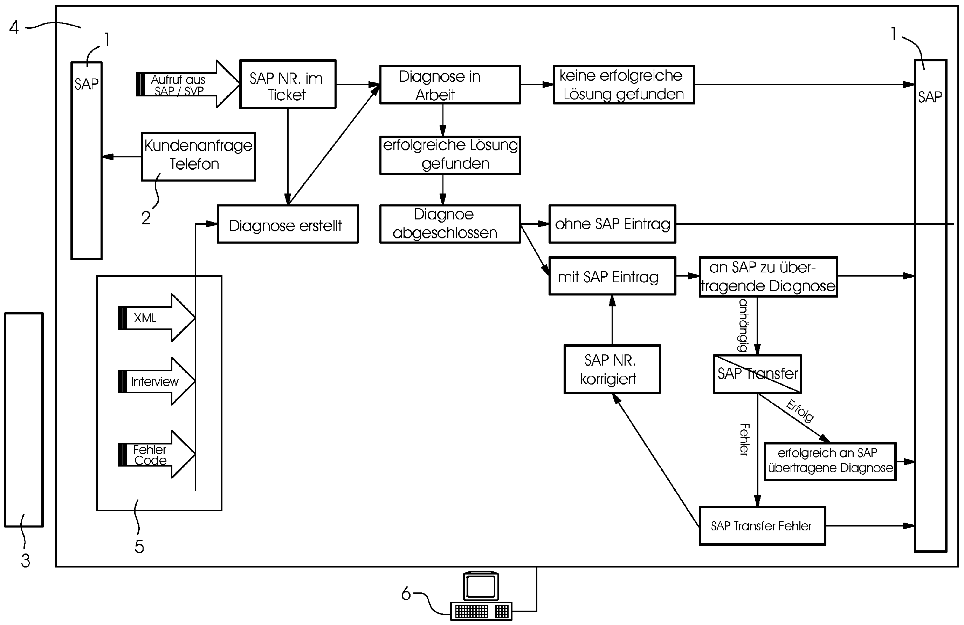

Diese Aufgabe wird erfindungsgemäß durch Patentanspruch 1 gelöst, vorteilhafte Ausgestaltungen der Erfindung sind den Unteransprüchen und der Zeichnung zu entnehmen. Gemäß der vorliegenden Erfindung ist vorgesehen, dass der auf einem ersten Informationskanal wie z. B. über eine Telefonverbindung erteilte Auftrag zur Wartung mit Betriebsdaten, welche über einen zweiten Informationskanal wie das Internet beim Rechner der Maschine abgefragt worden sind, rechnerisch verknüpft werden, so dass diese Daten, auch wenn sie zunächst auf unterschiedlichen Wegen zum Fernwartungsrechner gelangen und auch zunächst in unterschiedlichen Systemen abgespeichert werden, miteinander verbunden werden. Die so verknüpften Daten werden dann mittels des Fernwartungsrechners einer Fehlerdiagnose unterzogen, so dass das gemeldete Problem behoben werden kann. Die Verknüpfung der Betriebsdaten mit dem Wartungsticket kann z. B. über die Maschinennummer erfolgen. Wenn der Wartungsauftrag am Telefon erteilt wird, so teilt der Auftraggeber die Seriennummer der Maschine mit. Diese Nummer wird dann zur Abfrage der Betriebsdaten genutzt, so dass die Betriebsdaten der richtigen Maschine über den zweiten Informationskanal wie das Internet abgefragt werden und mit dem Wartungsticket verknüpft werden. Dieses Wartungsticket kann z. B. in einem SAP System generiert werden und hat wiederum z. B. eine fortlaufende SAP Nummer. Die abgefragten Daten der Druckmaschine werden dagegen zunächst in einer Wissensdatenbank abgelegt und erst dann mit dem Wartungsticket verknüpft. Dabei kann noch zunächst eine Diagnose auf Basis der Daten aus der Wissensdatenbank erstellt werden und erst dann die Verknüpfung mit dem SAP Ticket aufgrund der gleichen Seriennummer der Maschine erfolgen.

In einer ersten Ausgestaltung der Erfindung ist vorgesehen, dass das Wartungsticket in einem System zur Wartungsverfolgung abgespeichert wird und dass nach erfolgter Diagnose und erfolgreicher Abarbeitung des Wartungstickets ein Eintrag in demselben Wartungsverfolgungssystem mit Verknüpfung zu dem Wartungsticket erstellt wird. Bei dem System zur Wartungsverfolgung handelt es sich bevorzugter weise um ein SAP System. Dabei wird sowohl das Wartungsticket im SAP System erzeugt als auch die Verfolgung der Wartungsvorgänge nach erfolgter Diagnose oder erfolgreicher Abarbeitung in demselben SAP System abgespeichert. Somit wird auch der finale Status des Wartungsvorgangs mit demselben Wartungsticket verknüpft, und der Wartungsvorgang ist nachvollziehbar abgelegt.

In einer weiteren Ausgestaltung der Erfindung ist vorgesehen, dass bei misslungener Verknüpfung des Eintrags der Diagnose mit dem Wartungsticket eine Fehlermeldung generiert wird. Es kann jedoch vorkommen, dass während der Wartungsverfolgung Diagnosedaten des Wartungstechnikers mit einer falschen SAP Nummer eingegeben worden sind, so dass eine falsche Zuordnung zu einem anderen Wartungsticket oder einem nicht existierenden Wartungsticket stattfindet. In diesem Fall ist keine korrekte Verknüpfung nach Erfolg der Diagnose mit dem Wartungsticket möglich, und das System zur Wartungsverfolgung generiert eine Fehlermeldung. In diesem Fall wird dem Wartungspersonal die Möglichkeit gegeben, nach Generierung der Fehlermeldung über eine Eingabeeinrichtung wie eine Tastatur Korrekturwerte zur Korrektur der Eingaben im Wartungsverfolgungssystem vorzunehmen. Damit kann dann eine erfolgreiche Übergabe des abgeschlossenen Wartungstickets an das SAP System sichergestellt werden.

Die Verknüpfung der Betriebsdaten aus der Datenbank mit dem Wartungsticket im Wartungsverfolgungssystem kann in einem gemeinsamen Datenfile erfolgen oder sie kann durch die Bereitstellung eines Links zu der Datenbank im Wartungsticket des Wartungsverfolgungssystems erfolgen. Dies stellt nur beispielhaft zwei Möglichkeiten zur Verknüpfung der für den Wartungsvorgang benötigten Daten dar. Dabei kann zusätzlich vorgesehen sein, dass der Link eine Benutzererkennung eines aktiven Benutzers des Wartungsverfolgungssystems und eine Seriennummer der zu wartenden Maschine enthält. In diesem Fall ist in dem Link in Form einer URL Adresse der Name des Wartungspersonals und die Seriennummer der gerade zu wartenden Maschine enthalten. Dies stellt eine besonders aussagekräftige Namensgebung dar und vermeidet die Verwechslung von entsprechenden Links durch das Wartungspersonal.

Es kann zusätzlich auch noch vorgesehen sein, dass der Link eine Servicemeldungsnummer des Wartungsverfolgungssystems enthält, wie z. B. die SAP Nummer des Wartungstickets. Die Datenübertragung aus der Wissensdatenbank nach Aufruf des Links an das Wartungsverfolgungssystem kann über gängige Datenbankschnittstellen erfolgen. Auf diese Art und Weise kann das Wartungspersonal auf den Fernwartungsrechner über das Wartungsverfolgungssystem auf die Daten der Wissensdatenbank zugreifen.

Die vorliegende Erfindung wird nachfolgend anhand einer Figur näher beschrieben und erläutert. Die Figur zeigt:
eine schematische Abbildung eines Fernwartungsrechners mit dem Ablauf der Verfolgung des Wartungsvorgangs in einem SAP System.

Die Figur zeigt schematisch ein Wartungsverfolgungssystem in Form eines SAP Systems 1, in dem verschiedene Vorgänge zur Wartungsverfolgung ablaufen. Der Wartungsvorgang wird über einen telefonisch 2 durch den Kunden erteilten Wartungsauftrag ausgelöst. Der Wartungsauftrag kann alternativ aber auch über das Internet durch eine vom Kunden gestartete online Verbindung oder per Email erteilt werden. Das SAP System 1 ist Bestandteil des Fernwartungsrechners 4, welcher außerdem eine Wissensdatenbank 5 umfasst. Die Wissensdatenbank 5 dient dazu, Betriebsdaten einer bei einem Kunden angeordneten Druckmaschine 3 z. B. über das Internet abzufragen und abzuspeichern. Die dabei übertragenen Betriebsdaten können in einem gängigen Format wie XML übertragen werden und enthalten insbesondere Fehlercodes und Fehlfunktionen der Druckmaschine 3. Es ist aber auch möglich, diese Daten telefonisch in einem Interview über das Wartungspersonal abfragen zu lassen, welches dann wiederum die abgefragten Daten der Druckmaschine 3 in der Wissensdatenbank 5 eingibt. Des Weiteren verfügt das SAP System über eine Schnittstelle zur Eingabe von Daten zur Generierung eines Wartungstickets mit einer SAP Nummer. Dazu kann ebenfalls Wartungspersonal, welches z. B. einen Wartungsauftrag per Telefon 2 entgegengenommen hat, ein entsprechendes Wartungsticket im SAP System 1 generieren und so einen Wartungsvorgang starten.

Nach Generierung eines solchen SAP Wartungstickets mit einer entsprechenden Nummer wird eine Verknüpfung zwischen dem SAP System 1 und der Wissensdatenbank 5 hergestellt. In der Wissensdatenbank 5 ist die gesamte Diagnosehistorie der betroffenen Maschine hinterlegt und die abgefragten Betriebsdaten. Auf Basis der so gewonnenen Daten kann nun eine Diagnose erstellt werden, deren Ergebnis wiederum in der Wissensdatenbank 5 abgespeichert wird. Auch dieses Ergebnis ist über einen Link im SAP Ticket jederzeit von dem Wartungspersonal über eine Bedieneinrichtung 6 abfragbar. Zu diesem Zweck wird in dem SAP System 1 im Wartungsticket ein Link zum Sprung in die Wissensdatenbank 5 bereitgestellt. Dieser Link hat die Form einer URL wie z.B. http://<knox2.0server>:<port>/sap2knox2.0jsp?user=bgvta2vtxyi%3d&serialno=123456&serviceno=56377829&sapsystem=P00 und kann so Parameter wie Benutzerkennung des aktiven Wartungspersonals, Seriennummer der im Wartungsticket referenzierten Druckmaschine 3 und SAP Ticketnummer enthalten. Bei mehreren SAP Systemen 1 kann zudem noch eine Kennung desjenigen SAP Systems enthalten sein, welche das entsprechende Wartungsticket generiert hat. Somit enthält der Link mit der URL die wichtige Informationszuordnung der betroffenen Druckmaschine 3 und des den Fehler behebenden Wartungspersonals sowie des SAP Tickets. Dabei wird die URL an die Wissensdatenbank 5 zunächst im Klartext übergeben, für den Parameter Benutzerpersonal wird jedoch eine Codierung durchgeführt.

Wenn das Wartungspersonal vor dem Bildschirm 6 nun den Link im SAP Ticket auswählt, öffnet sich ein neues Browserfenster, und es kann auf die Daten der Wissensdatenbank 5 zugegriffen werden. Dabei wird der Name des Wartungspersonals als Autor für eine neue Diagnose verwendet, während die Seriennummer der Druckmaschine 3 zur automatischen Identifikation der Druckmaschine 3 in der Wissensdatenbank 5 dient. Danach wählt das Wartungspersonal vor dem Bildschirm 6 den Wissensbereich der zugehörigen zu wartenden Druckmaschine 3 aus und startet eine neue Diagnose oder öffnet eine bestehende Diagnose aus der Diagnosehistorie der zu wartenden Druckmaschine 3. Dies kann automatisch durch Übergabe der Seriennummer der Druckmaschine 3 geschehen, so dass die entsprechende Diagnosehistorie der Druckmaschine 3 angeboten wird. Die Parameter Serviceticketnummer und zuständiges SAP System 1 werden in dem Serviceticket bei den Eingabefeldern vorbelegt, so dass das Wartungspersonal vor dem Bildschirm 6 diese durch das SAP System 1 übergebenen Werte nicht verändert kann.

Das Wartungspersonal führt dann eine Diagnose durch und versucht, eine Lösung für das identifizierte Problem zu finden. Wenn keine erfolgreiche Lösung gefunden wurde, so wird dies in das SAP Ticket eingetragen und im SAP System abgespeichert. Im Fall einer erfolgreichen Lösung wird die Diagnose abgeschlossen, und es erfolgt entweder kein Eintrag im SAP System, womit die Wartungsverfolgung zu Ende wäre, oder es erfolgt ein Eintrag im SAP System. In diesem Fall wird die Diagnose aus der Wissensdatenbank 5 an das SAP System 1 übergeben und dort abgespeichert, so dass jedem SAP Ticket die entsprechende erfolgreiche Diagnose zugeordnet wird. Wenn diese Übertragung an das SAP System 1 erfolgreich verläuft, so ist der Vorgang beendet und der Fall abgeschlossen.

Falls jedoch die Übertragung in das SAP System 1 scheitert, so wird eine Fehlermeldung generiert und das Wartungspersonal aufgefordert, gegebenenfalls die Nummer des SAP Tickets zu korrigieren, um ein erfolgreiches Abspeichern der übertragenen Diagnose zu ermöglichen. Die Übertragung der Diagnosedaten aus der Wissensdatenbank 5 auf das SAP System 1 geschieht automatisch, indem über eine Datenbankschnittstelle zyklisch die Daten der Wissensdatenbank abgefragt werden, welche den Status "Diagnose anhängig" oder "temporärer Fehler" haben. Beim Übertrag in das SAP System 1 wird dann ein Ergebnisstatus in das Feld Status oder im Fehlerfall eine Beschreibung zum Status in das Feld "Fehlertext" geschrieben. Der Status kann grundsätzlich die folgenden Werte annehmen: Diagnoseverfahren anhängig, Diagnoseverfahren abgeschlossen, Fehlermeldung, Datenübertragung nach SAP 1 und temporärer Fehler, wenn beim Übertragen der Daten in das SAP System 1 ein Abspeichern der Daten gescheitert ist, weil das Wartungsticket gerade durch einen anderen Benutzer geöffnet worden war. In diesem Fall werden bei der nächsten zyklischen Abfrage die Datensätze mit diesem Status nochmals übertragen.

Grundsätzlich ist vorgesehen, dass Datensätze im SAP System 1 nicht gelöscht werden, so dass die Informationen für Berichte und Fehleranalysen verwendet werden können. Fehlerhafte Datensätze in der Tabelle können von einem Administrator korrigiert werden und auf den Status "Wartungsvorgang anhängig" zurückgesetzt werden. Dieser korrigierte Datensatz kann dann beim nächsten Übertrag an das SAP System 1 übermittelt werden.

Die Wissensdatenbank 5 überträgt dabei die Daten der Diagnose in die Tabelle in der SAP Datenbank 1 über einen Datenbank-Trigger auf einem nicht gezeigten Protokollspeicher des Servers im Fernwartungsrechner 4. Die für die Übertragung des SAP System 1 gekennzeichneten Diagnosen werden dabei sofort beim Einfügen in den Protokollspeicher der Tabelle geschrieben. Mit dem Einfügen einer Diagnose in die Tabelle wird der Status auf "Diagnose anhängig" gesetzt, so dass die relevanten Diagnosen sofort für den nächsten Übertragungsvorgang an das SAP System 1 zur Verfügung stehen.

Auf diese Art und Weise werden die Daten der Wissensdatenbank 5 ständig mit dem SAP System 1 synchronisiert und es werden Verknüpfungen mit dem SAP Ticket und dessen Nummer aufrecht erhalten, so dass eine lückenlose Verfolgung des Wartungsvorgangs möglich ist.

### Bezugszeichenliste

- 1: SAP System
- 2: Kundenanfrage per Telefon
- 3: Druckmaschine
- 4: Fernwartungsrechner
- 5: Datenbank
- 6: Tastatur

## Patentansprüche

1. Verfahren zur Wartung von Maschinen (3) in der grafischen Industrie unter Einsatz wenigstens eines Fernwartungsrechners (4), wobei dem Rechner (4) über einen ersten Informationskanal (2) eine Wartungsanfrage für eine Maschine (3) zugeleitet und in ein Wartungsticket übernommen wird, wobei dem Rechner (4) über einen zweiten Informationskanal Betriebsdaten der Maschine (3) zugeleitet werden,
**dadurch gekennzeichnet,**
**dass** durch den Rechner (4) die Betriebsdaten mit dem Wartungsticket rechnerisch verknüpft werden und die verknüpften Daten mittels des Rechners (4) einer Fehlerdiagnose unterzogen werden.

2. Verfahren nach Anspruch 1,
**dadurch gekennzeichnet,**
**dass** das Wartungsticket in einem System zur Wartungsverfolgung (1) abgespeichert wird und dass nach erfolgter Diagnose oder erfolgreicher Abarbeitung des Wartungstickets ein Eintrag in demselben Wartungsverfolgungssystem (1) mit Verknüpfung zu dem Wartungsticket erstellt wird.

3. Verfahren nach Anspruch 2,
**dadurch gekennzeichnet,**
**dass** bei misslungener Verknüpfung des Eintrags der Diagnose mit dem Wartungsticket eine Fehlermeldung generiert wird.

4. Verfahren nach einem der vorhergehenden Ansprüche,
**dadurch gekennzeichnet,**
**dass** die dem Rechner (4) über den ersten Informationskanal (2) vermittelte Wartungsanfrage in demselben System zur Wartungsverfolgung (1) abgespeichert wird und dass die über den zweiten Informationskanal übermittelten Betriebsdaten der Maschine (3) in einer anderen Datenbank (5) abgespeichert werden.

5. Verfahren nach Anspruch 4,
**dadurch gekennzeichnet,**
**dass** die Daten aus dem Wartungsverfolgungssystem (1) und die zugehörigen Daten aus der Datenbank (5) im Wartungsticket miteinander verknüpft werden.

6. Verfahren nach Anspruch 3,
**dadurch gekennzeichnet,**
**dass** nach Generierung der Fehlermeldung über eine Eingabeeinrichtung (6) Korrekturwerte zur Korrektur der Eingaben im Wartungsverfolgungssystem (1) vorgenommen werden.

7. Verfahren nach einem der vorhergehenden Ansprüche,
**dadurch gekennzeichnet,**
**dass** die Verknüpfung zwischen der Datenbank (5) und dem Wartungsverfolgungssystem (1) durch Bereitstellung eines Links zu der Datenbank (5) in dem Wartungsverfolgungssystem (1) erfolgt.

8. Verfahren nach Anspruch 7,
**dadurch gekennzeichnet,**
**dass** der Link eine Benutzererkennung eines aktiven Benutzers des Wartungsverfolgungssystems (1) und eine Seriennummer der zu wartenden Maschine (3) enthält.

9. Verfahren nach Anspruch 8,
**dadurch gekennzeichnet,**
**dass** der Link zusätzlich eine Servicemeldungsnummer des Wartungsverfolgungssystems (1) enthält.

10. Verfahren nach einem der vorhergehenden Ansprüche,
**dadurch gekennzeichnet,**
**dass** die Datenübertragung von der Datenbank (5) an das Wartungsverfolgungssystem (1) über eine Datenbankschnittstelle erfolgt.

## Claims

1. Method for servicing machinery (3) in the graphic industry using at least one remote service computer (4), which receives a service request for a machine (3) via a first information channel (2) and transfers the service request into a service ticket and which receives operating data of the machine (3) via a second information channel,
**characterized in**
**that** the service computer (4) computationally links the operating data with the service ticket and subjects the linked data to a diagnostic fault-finding process.

2. Method according to claim 1,
**characterized in**
**that** the service ticket is saved in a service tracking system (1) and, once a diagnosis has been made or once the service ticket has been successfully processed, an entry containing a link to the service ticket is created in the same service tracking system (1).

3. Method according to claim 2,
**characterized in**
**that** an error message is generated when the linking of the diagnostic entry with the service ticket fails.

4. Method according to any one of the preceding claims,
**characterized in**
**that** the service request received by the computer (4) via the first Information channel (2) is saved in the same service tracking system (1) and the operating data of the machine (3) received via the second information channel are saved in a different database (5).

5. Method according to claim 4,
**characterized in**
**that** the data from the service tracking system (1) and the associated data from the database (5) are interlinked in the service ticket.

6. Method according to claim 3,
**characterized in**
**that** after the creation of the error message, correction values are input using an input device (6) to correct the entries in the service tracking system (1).

7. Method according to any one of the preceding claims,
**characterized in**
**that** the link between the database (5) and the service tracking system (1) is established by providing a link to the database (5) in the service tracking system (1).

8. Method according to claim 7,
**characterized in**
**that** the link contains a user ID of an active user of the service tracking system (1) and a serial number of the machine to be serviced (3).

9. Method according to claim 8,
**characterized in**
**that** the link additionally includes a service request number of the service tracking system (1).

10. Method according to any one of the preceding claims,
**characterized in**
**that** the data transmission from the database (5) to the service tracking system (1) is carried out via a database interface.

## Revendications

1. Procédé pour l'entretien de machines (3) dans l'industrie graphique, faisant appel à au moins un ordinateur de télémaintenance (4), pour lequel une demande d'entretien pour une machine (3) est transmise à l'ordinateur (4) via un premier canal d'information (2) et reprise dans un ticket de maintenance, les données d'exploitation de la machine (3) étant transmises au calculateur (4) via un deuxième canal d'information,
**caractérisé par le fait**
**que**, via le calculateur (4), les données d'exploitation sont combinées par le calcul avec le ticket de maintenance et que les données combinées sont soumises à un diagnostic des erreurs par le biais de l'ordinateur (4).

2. Procédé selon la revendication 1,
**caractérisé par le fait**
**que** le ticket de maintenance est mémorisé dans un système en vue du suivi de l'entretien (1) et qu'une fois le diagnostic effectué ou après traitement satisfaisant du ticket de maintenance, une entrée a lieu dans le même système de suivi de l'entretien (1) avec combinaison au ticket de maintenance.

3. Procédé selon la revendication 2,
**caractérisé par le fait**
**qu'**en cas d'échec de la combinaison de l'entrée de diagnostic avec le ticket de maintenance, un message d'erreur est généré.

4. Procédé selon l'une des revendications précédentes,
**caractérisé par le fait**
**que** la demande d'entretien transmise à l'ordinateur (4) via le premier canal d'information (2) est enregistrée dans le même système de suivi de l'entretien (1) et que les données d'exploitation de la machine (3) transmises via le deuxième canal d'information sont enregistrées dans une autre base de données (5).

5. Procédé selon la revendication 4,
**caractérisé par le fait**
**que** les données du système de suivi de l'entretien (1) et les données correspondantes de la base de données (5) sont combinées dans le ticket de maintenance.

6. Procédé selon la revendication 3,
**caractérisé par le fait**
**qu'**après génération du message d'erreur, des valeurs de correction sont saisies via un dispositif de saisie (6) pour la correction des entrées dans le système de suivi de l'entretien (1).

7. Procédé selon l'une des revendications précédentes,
**caractérisé par le fait**
**que** la combinaison entre la base de données (5) et le système de suivi de l'entretien (1) a lieu par mise à disposition d'un lien vers la base de données (5) dans le système de suivi de l'entretien (1).

8. Procédé selon la revendication 7,
**caractérisé par le fait**
**que** le lien renferme une détection d'utilisateur pour un utilisateur actif du système de suivi de l'entretien (1) et un numéro de série de la machine (3) devant faire l'objet d'un entretien.

9. Procédé selon la revendication 8,
**caractérisé par le fait**
**que** le lien renferme en supplément un numéro d'avis de service du système de suivi de l'entretien (1).

10. Procédé selon l'une des revendications précédentes,
**caractérisé par le fait**
**que** la transmission des données de la base de données (5) au système de suivi de l'entretien (1) s'effectue via une interface de la base de données.
